# EUROPÄISCHE PATENTSCHRIFT

(11) **EP 3 623 845 B1**
(45) Veröffentlichungstag und Bekanntmachung des Hinweises auf die Patenterteilung: **22.06.2022**
(21) Anmeldenummer: 19189292.6
(22) Anmeldetag: 31.07.2019
(51) Int. Cl.: G01S 17/93, G06K 9/00, G01S 17/02, G01S 17/04, G01S 17/86, G01S 17/931, G01S 7/481, G06V 10/147

(54) **SENSOR UND AUTONOMES FAHRZEUG**
SENSOR AND AUTONOMOUS VEHICLE
CAPTEUR ET VÉHICULE AUTONOME

(30) Priorität: 12.09.2018 DE 102018122263
(43) Veröffentlichungstag der Anmeldung: 18.03.2020
(73) Patentinhaber: SICK AG, 79183 Waldkirch (DE)
(72) Erfinder: Pfister, Michael, 79117 Freiburg (DE)

(56) Entgegenhaltungen:
- EP-A1- 1 927 867
- EP-A1- 3 217 195
- DE-A1- 10 026 305
- DE-A1-102004 038 906
- DE-U1-202010 012 985

## Beschreibung

Die vorliegende Erfindung betrifft einen Sensor nach dem Oberbegriff von Anspruch 1 und ein autonomes Fahrzeug nach dem Oberbegriff von Anspruch 10.

Autonome Fahrzeuge, wie mobile Plattformen, fahrerlose Transportsysteme oder fahrerlose Transportfahrzeuge sind mit Sicherheitssensorik zum Personen- und Kollisionsschutz ausgerüstet.

Zur Absicherung von fahrerlosen Transportsystemen werden beispielsweise Laserscanner oder Sicherheitslaserscanner verwendet.

Die DE10026305A1 offenbart eine optoelektronische Vorrichtung zur Überwachung eines Schutzbereichs mit zumindest einer berührungslos wirkenden Schutzeinrichtung. Die berührungslos wirkende Schutzeinrichtung umfasst eine Auswerteeinheit zum Erzeugen eines Gegenstandfeststellungssignals beim Eindringen eines Objektes in den Schutzbereich. Mit der berührungslos wirkenden Schutzeinrichtung ist eine Bilderfassungseinheit zum Erfassen eines flächigen oder räumlichen Bilderfassungsbereichs gekoppelt, mit der ein nahe am Schutzbereich, jedoch außerhalb des Schutzbereichs gelegener sekundärer Überwachungsbereich, erfassbar ist. Die berührungslos wirkende Schutzeinrichtung ist durch die Bilderfassungseinheit ansteuerbar.

Die DE202010012985U1 offenbart eine Sensoranordnung zur Objekterkennung in einem Überwachungsbereich mit einem entfernungsmessenden Laserscanner, mit mindestens einem weiteren entfernungsmessenden optoelektronischen Sensor, dessen Sichtbereich zumindest teilweise mit dem Sichtbereich des Laserscanners überlappt, und mit einer gemeinsamen Steuerungseinheit, die für einen Registrierungsmodus zur Bestimmung einer Transformationsvorschrift zwischen einem Koordinatensystem des Laserscanners und einem Koordinatensystem des weiteren Sensors ausgebildet ist, so dass im Betrieb Messpunkte des Laserscanners und Messpunkte des weiteren Sensors in einem gemeinsamen Weltkoordinatensystem zusammenführbar sind, wobei die gemeinsame Steuerungseinheit dafür ausgebildet ist, die Transformationsvorschrift mit Hilfe eines ebenen kooperativen Ziels in dem Überwachungsbereich zu bestimmen.

Die DE102004038906A1 offenbart ein Verfahren zur Erfassung beweglicher Objekte in einer Überwachungseinrichtung mit mindestens einer berührungslos wirkenden Schutzeinrichtung und einer Auswerteeinheit, die ein Steuersignal abgibt, das abhängig ist von einem zulässigen oder unzulässigen Objekt, das in ein einen Überwachungsbereich begrenzendes Schutzfeld der berührungslos wirkenden Schutzeinrichtung eindringt. Um die Überwachung sicherer zu gestalten, wird vorgeschlagen, dass ein Objekt vor dem Eintritt in den Überwachungsbereich von wenigstens einer kontaktlosen Erkennungseinrichtung identifiziert wird und Objektinformationen von einer Marke auf dem Objekt an die Auswerteeinheit übertragen werden.

Die EP1927867A1 offenbart einen optoelektronischen Sensor zur Erfassung von Objekten in einem dreidimensionalen Überwachungsbereich mit mindestens einem Bildsensor, der mittels einer Vielzahl von Lichtempfangselementen ein Pixelbild des Überwachungsbereichs aufnehmen kann, sowie mit mindestens einer Steuerung, die für die Erfassung eines Objekts aus Bilddaten des Pixelbildes ausgebildet ist. Dabei ist eine Mehrzahl von Bildsensoren vorgesehen, die jeweils mindestens eine Pixelzeile mit Lichtempfangselementen aufweisen und die Bildsensoren sind voneinander beabstandet angeordnet, so dass jeder Bildsensor eine eigene Ebene des Überwachungsbereichs aufnehmen kann.

Die EP3217195A1 offenbart, dass die Schutzfeldkonfiguration eines Schutzfelds auch durch spezifische zu erfassende Objekte definiert sein kann. Dazu weist der optische Sensor Umschaltmittel auf, mittels derer eine Schutzfeldumschaltung durchgeführt werden kann. Mit den Umschaltmitteln können demzufolge unterschiedliche Schutzfelder aktiviert werden, innerhalb derer der optische Sensor eine Objektdetektion zur Generierung des Objektfeststellungssignals, insbesondere des Schaltsignals durchführt.

Eine Aufgabe der Erfindung besteht darin, einen verbesserten Sensor bereitzustellen, welcher besser diagnostizierbar ist oder zur besseren Objekterkennung eingesetzt werden kann.

Die Aufgabe wird gelöst durch einen Sensor mit einer Vielzahl von Lichtsendern und einer Vielzahl von Lichtempfängern, welche in einem gemeinsamen Gehäuse angeordnet sind, wobei die optischen Achsen der Lichtsender und Lichtempfänger parallel oder in verschiedenen Winkelrichtungen mit Winkelabständen fächerförmig angeordnet sind, wodurch ein Schutzfeld gebildet ist und mit einer Steuer-und Auswerteeinheit zur Überwachung und Auswertung des Schutzfeldes, wobei mit der Steuer- und Auswerteeinheit eine Kamera verbunden ist, wobei die Kamerabilder von der Steuer- und Auswerteeinheit ausgewertet werden.

Bei dem Sensor kann es sich um einen Sicherheitssensor oder um einen nicht sicheren Sensor handeln. Mit Hilfe der Kamera ist es möglich, Diagnosebilder und/oder Konfigurationsbilder für den Sensor bereit zu stellen. Gemäß der Erfindung wird ein System mit einem Sensor und einer Kamera sowie der Steuer- und Auswerteeinheit bereitgestellt.

Beispielsweise ist die Kamera über eine Schnittstelle mit dem Sensor verbunden. Die Kamera kann beispielsweise in einem eigenen getrennten Gehäuse angeordnet sein. Bei der Schnittstelle kann es sich um eine drahtgebundene oder um eine drahtlose Schnittstelle handeln. Bei den drahtgebundenen Schnittstellen handelt es sich beispielweise um Ethernet oder andere Netzwerke oder Feldbusse. Bei den drahtlosen Schnittstellen handelt es sich beispielsweise um drahtloses Ethernet (WLAN), drahtlose Nahfeldkommunikation (NFC) oder beispielsweise Bluetooth.

Die Kamerabilder werden beispielsweise in einem Speicher des Sensors, einem zentralen Speicher einer Anlage oder in einem dezentralen Cloud-Speicher abgespeichert. Hierzu sind beispielsweise Softwarewerkzeuge des Herstellers vorgesehen, wie beispielsweise einheitliche Bedien-, Konfigurations- und Verwaltungssoftware, beispielsweise mit dem Namen SOPAS, SOPAS Air oder Safety Designer der Anmelderin.

Gemäß der Erfindung sind mehrere umschaltbare Schutzfelder vorgesehen. Die Schutzfelder werden dann abhängig von dem erfassten Kamerabild umgeschaltet.

Die Abstände der ausgesendeten Strahlen der Lichtsender vergrößern sich optional mit größer werdendem Abstand zum optoelektronischen Sensor und/oder die Abstände der empfangenen Strahlen der Lichtempfänger verkleinern sich optional mit kleiner werdendem Abstand zum optoelektronischen Sensor.

Bei dem Sensor kann es sich um einen Sicherheitssensor handeln. Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau der Steuer- und Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Die Steuer- und Auswerteeinheit erkennt Schutzfeldverletzungen und kann ein sicherheitsgerichtetes Abschaltsignal ausgeben, um eine gefahrbringende Bewegung einer Maschine oder eines Fahrzeugs oder eines Teils einer Maschine zu stoppen bzw. die Maschine, das Teil der Maschine oder ein Fahrzeug abzubremsen. Das kann z.B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Der erfindungsgemäße Sensor ist einfach und preiswert aufgebaut. Da der Sensor ohne mechanisch bewegliche Teile auskommt, weist dieser keinen mechanischen Verschleiß auf und besitzt eine lange Lebensdauer. Beispielsweise kann eine geforderte Einsatzdauer von beispielsweise ca. 20 Jahren mit dem erfindungsgemäßen Sensor erfüllt werden.

Der optionale Winkelabstand beträgt vorzugsweise nur wenige Grad. Beispielsweise 1° bis 20°, oder 1° bis 10° oder 1° bis 5°.

Gemäß der Erfindung werden die Lichtstrahlen in verschiedenen Winkelrichtungen fächerförmig ausgesendet bzw. empfangen, wodurch ein Überwachungsbereich dahingehend einfach untersucht werden kann, ob Objekte in dem Überwachungsbereich vorhanden sind oder nicht und an welcher Stelle, d. h. in welcher Entfernung die Objekte vorhanden sind. Weiter können die Objekte vermessen werden, bzw. eine Umgebungskontur und deren Veränderung erfasst werden. Durch die fächerförmige Aussendung der Lichtstrahlen, bzw. das fächerförmige Empfangen wird der Überwachungsbereich innerhalb einer fächerförmigen Ebene überwacht. Die Lichtsender bzw. Lichtempfänger sind beispielsweise im Umfang eines Zylinders radialsymmetrisch angeordnet. Der Laserscanner kann mit einer hohen Winkelgenauigkeit hergestellt werden, da die Lichtsender und Lichtempfänger fest fixiert sind und die Lichtstrahlen direkt, ohne bewegliche Teile in den Überwachungsbereich gelangen. Bei der Produktion des Laserscanners kann die Winkelgenauigkeit der Winkelrichtungen geprüft und eingestellt werden. Dadurch ist gewährleistet, dass jeder Laserscanner eine bestimmte geforderte mindeste Winkelgenauigkeit einhält.

In Weiterbildung der Erfindung ist der Sensor ein Sensor nach dem Lichtlaufzeitverfahren.

Ein Lichtlaufzeitsensor basiert beispielsweise auf einem Time-of-flight-Chip nach dem PMD-Verfahren, welche Abstandsmessungen auf Basis einer Phasenlagemessung modulierten Lichts durchführen.

Ein Distanzsensor bzw. Lichttaster nach dem Lichtlaufzeitprinzip weist mindestens einen Lichtsender auf, der aufeinanderfolgende Lichtimpulse in einen Messbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Gemäß der Erfindung weist ein Lichtempfänger des Distanzsensors mindestens ein Array aus Einzelphotonenlawinendioden auf.

Einzelphotonenlawinendioden werden auch synonym als ,Single Photon Avalanche Diode' kurz SPAD bezeichnet. Andere gängige Bezeichnungen sind ,Silicon Photomultiplier' (SiPM), ,Geigermode Avalanche Photon Diode' oder ,Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10^{6,} können bereits geringste Empfangsleistungen bis zu Einzelphotonen detektiert werden.

Eine Verwendung eines Lichtlaufzeitsensors, insbesondere die Verwendung von Einzelphotonenlawinendioden in Kombination mit Pulslasern liefern Abstandsinformationen mit einer Genauigkeit von beispielsweise bis zu ca. einem Millimeter. Gleichzeitig erlaubt eine einfache Vorsatzoptik über eine Fokussierung die Realisierung von guter Ortsselektivität und Abgrenzung gegenüber Störlicht.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich durchgängig moduliertes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch eine Zählrate oder durch eine Spannungsamplitude bei einer analogen Auswertung. Durch den Amplitudenwert kann eine Plausibilitätsprüfung, insbesondere bei sicherheitstechnischen Anwendungen durchgeführt werden.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip bzw. im Gehäuse integrierbar.

Der Distanzsensor bzw. Lichttaster ist kostengünstiger als bisher in der Sicherheitstechnik übliche photoempfindliche Empfänger. Durch Mehrfachanordnung von Lichttastern sind sehr kompakte Systeme möglich. Durch die Verwendung von Einzelphotonenlawinendioden ist eine hohe Empfindlichkeit bis zu einzelnen Photonen gegeben. Dadurch kann eine optionale Optik sehr kompakt ausgeführt werden.

In Weiterbildung der Erfindung ist die Kamera im Gehäuse des Sensors angeordnet. Dadurch ist die Kamera bereits integriert und optional bereits fest ausgerichtet. Die Kamera ist dadurch geschützt angeordnet und unempfindlich gegenüber Umwelteinflüssen. Die Kamera kann in dem Gehäuse verstellbar und justierbar angeordnet sein.

Erfindungsgemäß ist das Sichtfeld der Kamera auf das Schutzfeld gerichtet und mindestens der Bereich des Schutzfeldes wird von der Kamera erfasst. Dadurch können Ereignisse im Schutzfeld beispielsweise Eingriffe in das Schutzfeld durch die Kamera analysiert werden. So kann durch die Kamera festgestellt werden, aufgrund welcher Ursache der Eingriff erfolgte. So kann beispielsweise festgestellt werden, dass mutwillige unerlaubte Eingriffe von nicht zugelassenen Personen in das Schutzfeld stattfinden oder dass beispielsweise aufgrund von bestimmten Störungen wie beispielsweise Störobjekten, ein Eingriff in das Schutzfeld erfolgt. Die Kamera kann hierzu dauerhaft oder zeitweise aktiviert sein.

In Weiterbildung der Erfindung startet ein Ereignis im Schutzfeld eine Aufnahme der Kamera. Damit kann die Kamera durch den Eingriff oder ein bestimmtes Ereignis im Schutzfeld getriggert werden. Dadurch wird die Kameraaufnahme nur bei dem Eingriff oder Ereignis aktiviert und die Aufnahme gespeichert. Dadurch können seltene Eingriffe oder Ereignisse erfasst werden, ohne dass die Kamera ständig aktiviert ist, oder ohne dass die Kamerabilder ständig gespeichert werden müssen. Jedoch ist es auch vorgesehen, dass die Kamerabilder eines kurzen Zeitraums ständig gespeichert werden und bei einem Eingriff oder Ereignis die Aufnahme gestoppt wird, so dass die Vorgeschichte des Eingriffes durch die gespeicherten Kamerabilder dokumentiert ist.

Ein Trigger für die Kamera kann jedoch auch durch ein externes Ereignis der Maschinensteuerung ausgelöst werden. So können beispielsweise Maschinensignale, die über eine Schnittstelle einlesbar sind, Auslöser für die Kamera sein. So kann es beispielsweise vorgesehen sein, dass in einer laufenden Produktion die Produktionsgüter durch die Kamera erfasst und aufgenommen werden, um beispielsweise eine Anwesenheitskontrolle, eine Wartungskontrolle oder eine Qualitätskontrolle durchzuführen.

In Weiterbildung der Erfindung ist ein Aufnahmemodus der Kamera in der Steuer- und Auswerteeinheit einstellbar. Beispielsweise kann der Aufnahmemodus der Kamera ein Filmmodus, ein Einzelbildmodus oder ein Serienbildmodus sein. Weiter können zyklische Bildaufnahmen oder Zeitrafferaufnahmen als Aufnahmemodus vorgesehen sein.

In Weiterbildung der Erfindung werden die Kameraaufnahmen der Kamera durch die Steuer- und Auswerteeinheit ausgewertet, die zu einem Eingriff in das Schutzfeld geführt haben. Dabei werden die Aufnahmen die Vor- und nach einem Eingriff in das Schutzfeld von der Kamera gemacht werden abgespeichert und analysiert. Dabei zeichnet die Kamera beispielsweise laufend temporär Bilder auf, die dann bei einem Eingriff in das Schutzfeld dauerhaft abgespeichert werden. Dabei werden die beobachteten Szenarien klassifiziert und bewertet und anschließend abgespeichert. So kann beispielsweise festgestellt werden, ob Eingriffe in das Schutzfeld von einer Person, von Materialien oder beispielsweise von Förderfahrzeugen erfolgte. Damit können die Gründe für einen Eingriff in das Schutzfeld in Klassen klassifiziert und/oder diagnostiziert werden.

In Weiterbildung der Erfindung ist eine Wiederholrate von Aufnahmen für die Kamera in der Steuer- und Auswerteeinheit änderbar. Beispielsweise wird die Wiederholrate abhängig von der Häufigkeit von Eingriffen in das Schutzfeld angepasst. Beispielsweise wird abhängig von einer hohen Anzahl der Eingriffe pro Zeiteinheit in das Schutzfeld die Wiederholrate von Aufnahmen verringert. Beispielsweise ist die Wiederholrate der Aufnahmen in den Intervallen 1 Sekunde, 2 Sekunden, 5 Sekunden, 10 Sekunden, 30 Sekunden, 1 Minute oder 5 Minuten usw. einstellbar.

Weiter kann die Wiederholrate und/oder eine maximale Wiederholrate für Aufnahmen, beispielsweise generell oder beispielsweise pro Klasse voreingestellt werden. Beispielsweise können 5 Aufnahmen pro Minute oder 5 Aufnahmen pro Stunde voreingestellt werden.

Weiter können auch Aufnahmezeiten ignoriert werden, so dass in bestimmten Intervallen keine Aufnahmen gespeichert werden. Wenn beispielsweise jede Minute ein neues Teil bzw. ein Objekt angeliefert wird und daraus eine zulässige Unterbrechung der Lichtstrahlen stattfindet, dann kann in der Steuer- und Auswerteeinheit voreingestellt werden, dass keine Aufnahmen in der Zeit, wenn das Teil bzw. das Objekt angeliefert wird erfolgt. Vor und nach der zulässigen Unterbrechung werden aber weiterhin Aufnahmen gemacht und ausgewertet. Die Zeitdauer der Anlieferung und zulässigen Unterbrechung des Sensors kann beispielsweise 20 Sekunden dauern.

In Weiterbildung der Erfindung ist die Steuer- und Auswerteeinheit ausgebildet, aufgrund der Kameraaufnahme eine Codeerkennung durchzuführen und Zeichen eines Strichcodes oder Matrixcodes sind durch die Steuer- und Auswerteeinheit lesbar. Dadurch können vorgesehene Konfigurationen im Sensor aktiviert werden. So kann es beispielsweise vorgesehen sein, dass auf Paketen angebrachte Barcodes gelesen werden und abhängig von den gelesenen Barcodes eine Änderung der aktiven Schutzfelder vorgenommen wird. Die erfasste Barcodeinformation kann dabei auch an nachgelagerte Prozesse und Anlagen weitergegeben werden, wodurch eine Produktionsanlage gesteuert werden kann.

In Weiterbildung der Erfindung ist die Steuer- und Auswerteeinheit ausgebildet, aufgrund der Kameraaufnahme eine Objekterkennung durchzuführen und zulässige von unzulässigen Objekten zu unterscheiden, und bei zulässigen Objekten ein Objektfeststellungssignal des Sensors zu unterdrücken. Beispielsweise werden durch die Kamera Objekte erfasst, die einen Durchgang zu einer Verarbeitungsstation passieren. Durch die Kamera werden die Objekte erfasst und identifiziert. Handelt es sich um zulässige Objekte, wird der Sensor gemutet, d. h. überbrückt, so dass die Objekte den Durchgang passieren können. Werden jedoch unzulässige Objekte wie beispielsweise Personen detektiert, die den Durchgang nicht passieren dürfen, so bleibt der Sensor aktiv und die Personen werden durch den Sensor detektiert, wodurch beispielsweise eine gefahrbringende Bewegung stillgesetzt wird.

In Weiterbildung der Erfindung ist die Kamera eine Kamera nach dem Lichtlaufzeitverfahren. Dadurch kann die Kamera selbst dreidimensionale Bilder erzeugen, wodurch eine bessere Objekterkennung bzw. Objektklassifizierung ermöglicht wird.

In Weiterbildung der Erfindung ist eine Ausgabeschnittstelle für Messdaten vorgesehen. Die Ausgabeschnittstelle ist mit der Steuer- und Auswerteeinheit verbunden.

Beispielsweise können über die Ausgabeschnittstelle Entfernungsbilder bzw. Distanzbilder ausgegeben werden. Die Entfernungsbilder können beispielsweise über eine Farbcodierung oder eine Falschfarbendarstellung Tiefenkarten der Aufnahme darstellen. Beispielsweise können fortlaufend aufgezeichnete Entfernungsbilder für ein Mapping einer Werkshalle herangezogen werden oder beispielsweise Navigationsdaten für einfachere autonome Transportfahrzeuge erstellt werden.

Weiter können die Entfernungsbilder bzw. die Distanzbilder für eine vorgelagerte Qualitätskontrolle und/oder Vollständigkeitskontrolle herangezogen werden.

Beispielsweise kann gemäß einer Weiterbildung des Sensors eine Aufnahme eines Objektes erfolgen, beispielsweise eines Kartons und ggf. zugehörige Kodeinformationen, beispielsweise Strichkodeinformationen ausgewertet werden. Zusätzlich sind in einer Datenbank die Objekte gespeichert mit zusätzlichen Informationen wie z. B. Volumenangaben oder Abmessungen der Objekte die mit den Daten der Ausgabeschnittstelle kombiniert werden können.

In Weiterbildung der Erfindung kann bei zulässigen Objekten ein Objektfeststellungssignal unterdrückt werden, wobei diese Funktion auch als Muting, also einer Stummschaltung oder als Ausblendung oder als teilweise Ausblendung von Strahlachsen erfolgen kann. So kann die Unterdrückung des Objektfeststellungssignals basieren auf der Kombination von Abmessungen also Breite und/oder Höhe und/oder Tiefe und/oder Höhe des Objektes und/oder der Geschwindigkeit und/oder einer Objekt-Farbe und/oder einer Objekt-Struktur des Objektes. Beispielsweise werden nur graue Pakete mit kleinen Aufklebern und beispielsweise einer bestimmten Geschwindigkeit, beispielsweise 1 m/s mit einer Toleranz von +/- 20% als zulässige Objekte klassifiziert.

Beispielsweise kann eine Unterdrückung des Objektfeststellungssignals bei Muting oder bei einer Ausblendung nur dann erfolgen, wenn beispielsweise eine durch den Sensor und/oder durch die Kamera erfasste Objektgeschwindigkeit mit einer vorgegebenen Soll-Geschwindigkeit übereinstimmt. Die Soll-Geschwindigkeit wird entweder fix in der Steuer- und Auswerteeinheit des Sensors konfiguriert oder über externe Signale über eine Eingangsschnittstelle vorgegeben. So können beispielsweise Encoder Signale eines externen Encoders oder eine 1-aus-n Auswertung von z. b. zwei Eingängen vorgenommen werden. So arbeitet beispielsweise eine Maschine im Normalbetrieb mit einer Geschwindigkeit von z. B. 1 m/s und in einem Einrichtbetrieb mit einer Geschwindigkeit von z. B. 0,1 m/s.

In Weiterbildung der Erfindung weist ein autonomes Fahrzeug einen erfindungsgemäßen Sensor auf.

Da der Sensor ohne bewegliche Teile auskommt, die beispielsweise beim Einsatz in Fahrzeugen Beschleunigungen ausgesetzt sein können, ist der erfindungsgemäße Sensor unempfindlicher gegen Schwing- und Schockbelastungen und kann daher problemlos in mechanisch bewegten Objekten wie Fahrzeugen insbesondere Flurförderfahrzeugen eingesetzt werden. Dadurch, dass der Sensor ohne bewegliche Teile auskommt, kann der Sensor auch sehr kompakt ausgeführt werden.

Beispielsweise kann die Kamera bereits bei der Inbetriebnahme des autonomen Fahrzeugs genutzt werden. So kann die Kamera bei einer Erstbefahrung einer Umgebung, beispielsweise einer Lagerhalle zum Zwecke eines Mapping, also der Erfassung der Umgebung, aktiv Bilder der Umgebung erzeugen und diese abspeichern. Aus den Bildern kann die räumliche Umgebung des Fahrzeugs rekonstruiert werden. Dabei werden beispielsweise die Ecken, Kanten, Wände, Flächen, Säulen, Routen usw. erkannt und eingelernt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einem fächerförmigen Schutzfeld und einer Kamera;
- Figur 2: einen Sensor mit parallelen optischen Achsen und einer Kamera;
- Figur 3: einen Sensor mit parallelen optischen Achsen und einer Kamera zur Erkennung von Strichcodes.
- Figur 4: ein autonomes Fahrzeug mit einem Sensor und einer Kamera.

In den nachfolgenden Figuren sind identische Teile mit identischen Bezugszeichen versehen.

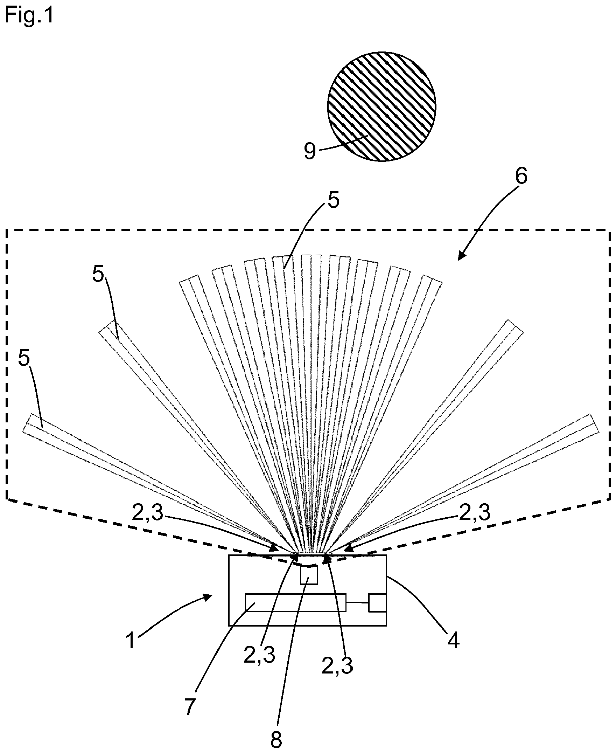

Figur 1 zeigt einen Sensor 1 mit einer Vielzahl von Lichtsendern 2 und einer Vielzahl von Lichtempfängern 3, welche in einem gemeinsamen Gehäuse 4 angeordnet sind, wobei die optischen Achsen 5 der Lichtsender 2 und Lichtempfänger 3 in verschiedenen Winkelrichtungen mit Winkelabständen fächerförmig angeordnet sind, wodurch ein Schutzfeld 6 gebildet ist und mit einer Steuer-und Auswerteeinheit 7 zur Überwachung und Auswertung des Schutzfeldes 6, wobei mit der Steuer- und Auswerteeinheit 7 eine Kamera 8 verbunden ist, wobei die Kamerabilder von der Steuer- und Auswerteeinheit 7 ausgewertet werden.

Bei dem Sensor 1 kann es sich um einen Sicherheitssensor oder um einen nicht sicheren Sensor handeln. Mit Hilfe der Kamera 8 ist es möglich, Diagnosebilder und/oder Konfigurationsbilder für den Sensor 1 bereit zu stellen.

Beispielsweise ist die Kamera 8 über eine Schnittstelle mit dem Sensor 1 verbunden. Bei der Schnittstelle kann es sich um eine drahtgebundene oder um eine drahtlose Schnittstelle handeln.

Die Kamerabilder werden beispielsweise in einem Speicher des Sensors, einem zentralen Speicher einer Anlage oder in einem dezentralen Cloud-Speicher abgespeichert.

Gemäß der Erfindung sind beispielsweise mehrere umschaltbare Schutzfelder 6 vorgesehen. Die Schutzfelder 6 werden dann beispielsweise abhängig von dem erfassten Kamerabild umgeschaltet.

Die Steuer- und Auswerteeinheit 7 erkennt Schutzfeldverletzungen und kann ein sicherheitsgerichtetes Abschaltsignal ausgeben, um eine gefahrbringende Bewegung einer Maschine oder eines Fahrzeugs oder eines Teils einer Maschine zu stoppen bzw. die Maschine, das Teil der Maschine oder ein Fahrzeug abzubremsen. Das kann z.B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Der Winkelabstand beträgt vorzugsweise nur wenige Grad. Beispielsweise 1° bis 20°, oder 1° bis 10° oder 1° bis 5°.

Gemäß Figur 1 werden die Lichtstrahlen in verschiedenen Winkelrichtungen fächerförmig ausgesendet bzw. empfangen, wodurch ein Überwachungsbereich dahingehend einfach untersucht werden kann, ob Objekte 9 in dem Überwachungsbereich vorhanden sind oder nicht und an welcher Stelle, d. h. in welcher Entfernung die Objekte 9 vorhanden sind. Weiter können die Objekte 9 vermessen werden, bzw. eine Umgebungskontur und deren Veränderung erfasst werden. Durch die fächerförmige Aussendung der Lichtstrahlen, bzw. das fächerförmige Empfangen wird der Überwachungsbereich innerhalb einer fächerförmigen Ebene überwacht. Die Lichtsender 2 bzw. Lichtempfänger 3 können beispielsweise auch im Umfang eines Zylinders radialsymmetrisch angeordnet sein. Der Sensor kann mit einer hohen Winkelgenauigkeit hergestellt werden, da die Lichtsender und Lichtempfänger fest fixiert sind und die Lichtstrahlen direkt, ohne bewegliche Teile in den Überwachungsbereich gelangen. Bei der Produktion des Sensors kann die Winkelgenauigkeit der Winkelrichtungen geprüft und eingestellt werden. Dadurch ist gewährleistet, dass jeder Sensor eine bestimmte geforderte mindeste Winkelgenauigkeit einhält.

Gemäß Figur 1 ist der Sensor 1 ein Sensor 1 nach dem Lichtlaufzeitverfahren.

Gemäß Figur 1 ist die Kamera 8 im Gehäuse 4 des Sensors 1 angeordnet. Dadurch ist die Kamera 8 bereits integriert und optional bereits fest ausgerichtet. Die Kamera 8 kann in dem Gehäuse 4 verstellbar und justierbar angeordnet sein.

Gemäß Figur 1 ist das Sichtfeld der Kamera 8 auf das Schutzfeld 6 gerichtet und mindestens der Bereich des Schutzfeldes 6 wird von der Kamera 8 erfasst. Dadurch können Ereignisse im Schutzfeld 6, beispielsweise Eingriffe in das Schutzfeld 6 durch die Kamera 8 analysiert werden. So kann durch die Kamera 8 festgestellt werden, aufgrund welcher Ursache der Eingriff erfolgte. Die Kamera 8 kann hierzu dauerhaft oder zeitweise aktiviert sein.

Gemäß Figur 1 startet ein Ereignis im Schutzfeld 6 eine Aufnahme der Kamera 8. Damit kann die Kamera 8 durch den Eingriff oder ein bestimmtes Ereignis im Schutzfeld 6 getriggert werden. Dadurch wird die Kameraaufnahme nur bei dem Eingriff oder Ereignis aktiviert und die Aufnahme gespeichert. Dadurch können seltene Eingriffe oder Ereignisse erfasst werden, ohne dass die Kamera 8 ständig aktiviert ist, oder ohne dass die Kamerabilder ständig gespeichert werden müssen. Jedoch ist es auch vorgesehen, dass die Kamerabilder eines kurzen Zeitraums ständig gespeichert werden und bei einem Eingriff oder Ereignis die Aufnahme gestoppt wird, so dass die Vorgeschichte des Eingriffes durch die gespeicherten Kamerabilder dokumentiert ist.

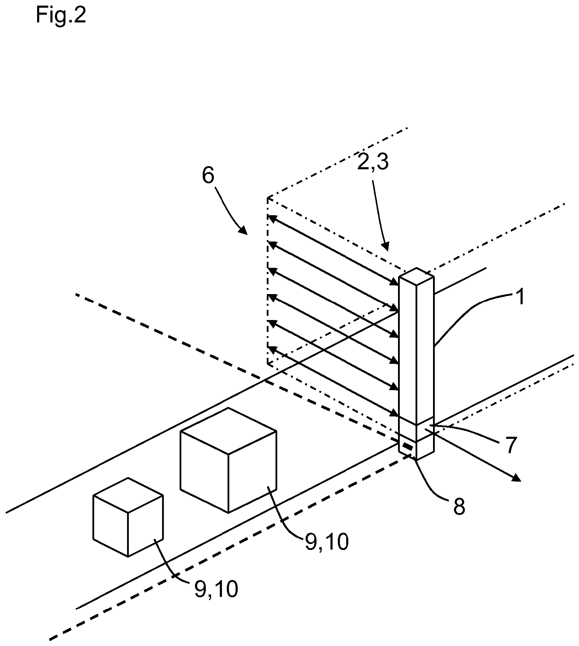

Ein Trigger für die Kamera 8 kann jedoch auch gemäß Figur 2 durch ein externes Ereignis der Maschinensteuerung ausgelöst werden. So können beispielsweise Maschinensignale, die über eine Schnittstelle einlesbar sind, Auslöser für die Kamera 8 sein. So kann es beispielsweise vorgesehen sein, dass in einer laufenden Produktion die Produktionsgüter bzw. Objekte 9 durch die Kamera 8 erfasst und aufgenommen werden, um beispielsweise eine Anwesenheitskontrolle, eine Wartungskontrolle oder eine Qualitätskontrolle durchzuführen.

Gemäß Figur 2 ist ein Aufnahmemodus der Kamera 8 in der Steuer- und Auswerteeinheit 7 einstellbar. Beispielsweise kann der Aufnahmemodus der Kamera 8 ein Filmmodus, ein Einzelbildmodus oder ein Serienbildmodus sein.

Gemäß Figur 2 ist die Steuer- und Auswerteeinheit 7 ausgebildet, aufgrund der Kameraaufnahme eine Objekterkennung durchzuführen und zulässige Objekte 10 von unzulässigen Objekten zu unterscheiden, und bei zulässigen Objekten 10 ein Objektfeststellungssignal des Sensors 1 zu unterdrücken. Beispielsweise werden durch die Kamera 8 Objekte 9 erfasst, die einen Durchgang zu einer Verarbeitungsstation passieren. Durch die Kamera 8 werden die Objekte 9 erfasst und identifiziert. Handelt es sich um zulässige Objekte 10, wird der Sensor 1 gemutet, d. h. überbrückt, so dass die Objekte 9 den Durchgang passieren können. Werden jedoch unzulässige Objekte wie beispielsweise Personen detektiert, die den Durchgang nicht passieren dürfen, so bleibt der Sensor 1 aktiv und die Personen werden durch den Sensor 1 detektiert, wodurch beispielsweise eine gefahrbringende Bewegung stillgesetzt wird.

Gemäß Figur 2 ist die Kamera 8 eine Kamera 8 nach dem Lichtlaufzeitverfahren. Dadurch kann die Kamera 8 selbst dreidimensionale Bilder erzeugen, wodurch eine bessere Objekterkennung bzw. Objektklassifizierung ermöglicht wird.

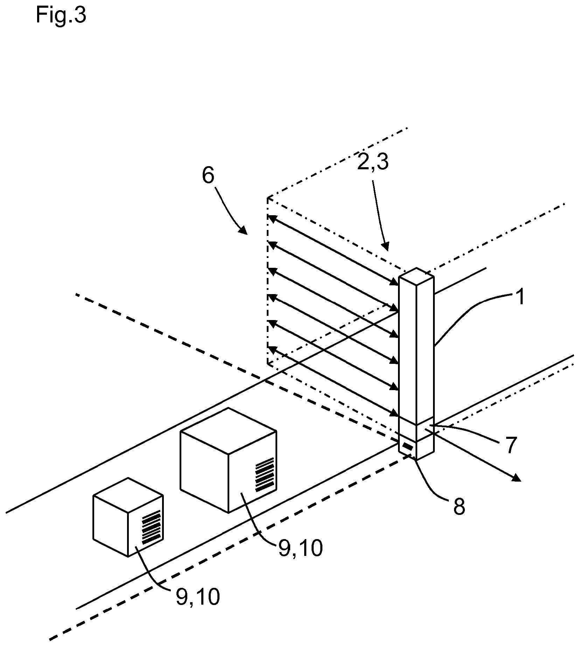

Gemäß Figur 3 ist die Steuer- und Auswerteeinheit 7 ausgebildet, aufgrund der Kameraaufnahme eine Codeerkennung durchzuführen und Zeichen eines Strichcodes oder Matrixcodes sind durch die Steuer- und Auswerteeinheit 7 lesbar. Dadurch können vorgesehene Konfigurationen im Sensor 1 aktiviert werden. So kann es beispielsweise vorgesehen sein, dass auf Paketen bzw. Objekten 9 angebrachte Barcodes gelesen werden und abhängig von den gelesenen Barcodes, eine Änderung der aktiven Schutzfelder 6 vorgenommen wird. Die erfasste Barcodeinformation kann dabei auch an nachgelagerte Prozesse und Anlagen weitergegeben werden, wodurch eine Produktionsanlage gesteuert werden kann.

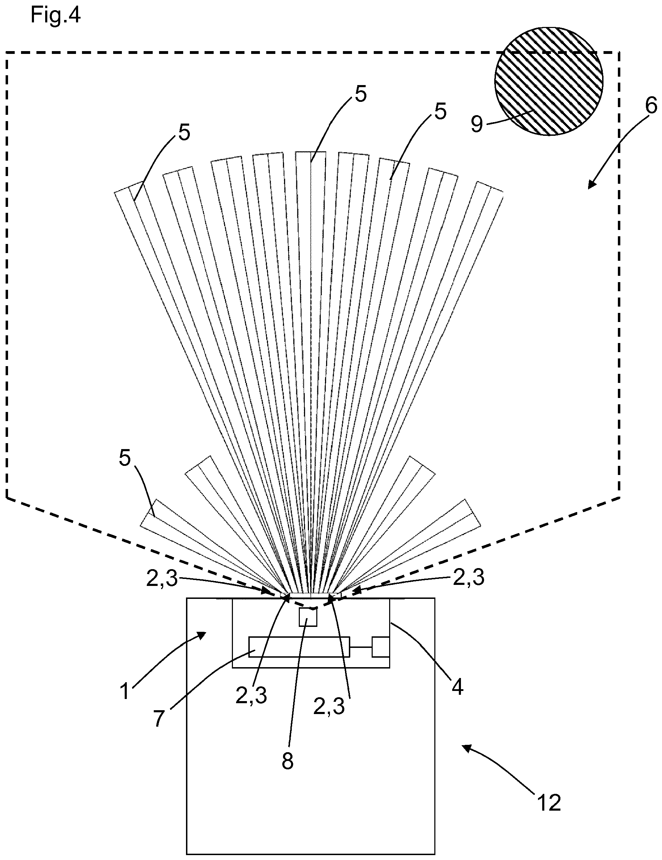

Gemäß Figur 4 weist ein autonomes Fahrzeug 12 einen erfindungsgemäßen Sensor 1 auf.

Beispielsweise kann die Kamera 8 bereits bei der Inbetriebnahme des autonomen Fahrzeugs 12 genutzt werden. So kann die Kamera 8 bei einer Erstbefahrung einer Umgebung, beispielsweise einer Lagerhalle zum Zwecke eines Mapping, also der Erfassung der Umgebung, aktiv Bilder der Umgebung erzeugen und diese abspeichern. Aus den Bildern kann die räumliche Umgebung des Fahrzeugs 12 rekonstruiert werden. Dabei werden beispielsweise die Ecken, Kanten, Wände, Flächen, Säulen, Routen usw. erkannt und eingelernt.

### Bezugszeichen:

- 1: Sensor
- 2: Lichtsender
- 3: Lichtempfänger
- 4: Gehäuse
- 5: optische Achse
- 6: Schutzfeld
- 7: Steuer- und Auswerteeinheit
- 8: Kamera
- 9: Objekt
- 10: zulässiges Objekt
- 12: autonomes Fahrzeug

## Patentansprüche

1. System mit einem Sensor (1), einer Kamera (8), und einer Steuer- und Auswerteeinheit (7) zur Überwachung und Auswertung eines Schutzfeldes (6), wobei der Sensor (1) eine Vielzahl von Lichtsendern (2) und eine Vielzahl von Lichtempfängern (3) aufweist, welche in einem gemeinsamen Gehäuse (4) angeordnet sind, wobei die optischen Achsen (5) der Lichtsender (2) und Lichtempfänger (3) parallel oder in verschiedenen Winkelrichtungen mit Winkelabständen fächerförmig angeordnet sind, wodurch das Schutzfeld (6) gebildet ist, wobei mit der Steuer- und Auswerteeinheit (7) die Kamera (8) verbunden ist, und wobei Kamerabilder der Kamera (8) von der Steuer- und Auswerteeinheit (7) ausgewertet werden,
**dadurch gekennzeichnet, dass**
mehrere umschaltbare Schutzfelder vorgesehen sind, wobei die Schutzfelder abhängig von dem erfassten Kamerabild umgeschaltet werden, wobei das Sichtfeld der Kamera (8) auf das Schutzfeld (6) gerichtet ist und mindestens der Bereich des Schutzfeldes (6) von der Kamera (8) erfasst wird.

2. System nach Anspruch 1, **dadurch gekennzeichnet, dass** der Sensor (1) ein Sensor (1) nach dem Lichtlaufzeitverfahren ist.

3. System nach mindestens einem der vorhergehenden Ansprüche, **dadurch gekennzeichnet, dass** die Kamera (8) im Gehäuse (4) angeordnet ist.

4. System nach mindestens einem der vorhergehenden Ansprüche, **dadurch gekennzeichnet, dass** ein Ereignis im Schutzfeld (6) eine Aufnahme der Kamera (8) startet.

5. System nach mindestens einem der vorhergehenden Ansprüche, **dadurch gekennzeichnet, dass** ein Aufnahmemodus der Kamera (8) in der Steuer- und Auswerteeinheit (7) einstellbar ist.

6. System nach mindestens einem der vorhergehenden Ansprüche, **dadurch gekennzeichnet, dass** die Kameraaufnahmen der Kamera durch die Steuer- und Auswerteeinheit ausgewertet werden, die zu einem Eingriff in das Schutzfeld geführt haben.

7. System nach mindestens einem der vorhergehenden Ansprüche, **dadurch gekennzeichnet, dass** eine Wiederholrate von Aufnahmen für die Kamera in der Steuer- und Auswerteeinheit änderbar ist.

8. System nach mindestens einem der vorhergehenden Ansprüche, **dadurch gekennzeichnet, dass** die Steuer- und Auswerteeinheit (7) ausgebildet ist, aufgrund der Kameraaufnahme eine Codeerkennung durchzuführen und Zeichen eines Strichcodes oder Matrixcodes durch die Steuer- und Auswerteeinheit (7) identifizierbar sind.

9. System nach mindestens einem der vorhergehenden Ansprüche, **dadurch gekennzeichnet, dass** die Steuer- und Auswerteeinheit (7) ausgebildet ist, aufgrund der Kameraaufnahme der Kamera (8) eine Objekterkennung durchzuführen und zulässige Objekte (10) von unzulässigen Objekten zu unterscheiden, und bei zulässigen Objekten (10) ein Objektfeststellungssignal des Sensors zu unterdrücken.

10. System nach mindestens einem der vorhergehenden Ansprüche, **dadurch gekennzeichnet, dass** die Kamera (8) eine Kamera (8) nach dem Lichtlaufzeitverfahren ist.

11. System nach mindestens einem der vorhergehenden Ansprüche, **dadurch gekennzeichnet, dass** eine Ausgabeschnittstelle für Messdaten vorgesehen ist.

12. Autonomes Fahrzeug (12) mit einem System nach mindestens einem der Ansprüche 1 bis 11.

## Claims

1. A system having a sensor (1), a camera (8), and a control and evaluation unit (7) for surveying and evaluating of a protected field (6), wherein the sensor (1) has a plurality of light transmitters (2) and a plurality of light receivers (3) that are arranged in a common housing (4); wherein the optical axes (5) of the light transmitters (2) and light receivers (3) are arranged in parallel or in fan form at different angular directions having angle spacings, whereby the protected field (6) is formed; wherein the camera (8) is connected to the control and evaluation unit (7); and wherein camera images of the camera (8) are evaluated by the control and evaluation unit (7),
**characterized in that**
a plurality of switchable protected fields are provided, with the protected fields being switched over in dependence on the detected camera image, and with the field of view of the camera (8) being directed to the protected field (6) and at least the region of the protected field (6) being detected by the camera (8).

2. A system in accordance with claim 1, **characterized in that** the sensor (1) is a sensor (1) in accordance with the time of flight process.

3. A system in accordance with at least one of the preceding claims, **characterized in that** the camera (8) is arranged in the housing (4).

4. A system in accordance with at least one of the preceding claims, **characterized in that** an event in the protected field (6) starts a shot of the camera.

5. A system in accordance with at least one of the preceding claims, **characterized in that** a recording mode of the camera (8) can be set in the control and evaluation unit (7).

6. A system in accordance with at least one of the preceding claims, **characterized in that** the camera shots of the camera that have resulted in an intervention in the protected field are evaluated by the control and evaluation unit.

7. A system in accordance with at least one of the preceding claims, **characterized in that** a repetition rate of shots for the camera is changeable in the control and evaluation unit.

8. A system in accordance with at least one of the preceding claims, **characterized in that** the control and evaluation unit (7) is configured to carry out a code recognition on the basis of the camera shot; and **in that** symbols of a barcode or of a matrix code can be identified by the control and evaluation unit (7).

9. A system in accordance with at least one of the preceding claims, **characterized in that** the control and evaluation unit (7) is configured to carry out an object recognition on the basis of the camera shot of the camera (8) and to distinguish permitted objects (10) from unpermitted objects and to suppress an object determination signal of the sensor with permitted objects (10).

10. A system in accordance with at least one of the preceding claims, **characterized in that** the camera (8) is a camera (8) in accordance with the time of flight process.

11. A system in accordance with at least one of the preceding claims, **characterized in that** an output interface for measured data is provided.

12. An autonomous vehicle (12) having a system in accordance with at least one of the claims 1 to 11.

## Revendications

1. Système comprenant un capteur (1), une caméra (8) et une unité de commande et d'évaluation (7) pour surveiller et évaluer un champ de protection (6), dans lequel le capteur (1) comprend une pluralité d'émetteurs de lumière (2) et une pluralité de récepteurs de lumière (3), qui sont disposés dans un boîtier commun (4), les axes optiques (5) des émetteurs de lumière (2) et des récepteurs de lumière (3) étant disposés en parallèle ou en éventail dans différentes directions angulaires avec des espacements angulaires, ce qui forme ledit champ de protection (6), la caméra (8) est connectée à l'unité de commande et d'évaluation (7), et les images de la caméra (8) sont évaluées par l'unité de commande et d'évaluation (7),
**caractérisé en ce que**
il est prévu plusieurs champs de protection commutables, les champs de protection étant commutés en fonction de l'image de caméra saisie, le champ de vision de la caméra (8) étant orienté vers le champ de protection (6) et au moins la zone du champ de protection (6) étant saisie par la caméra (8).

2. Système selon la revendication 1, **caractérisé en ce que** le capteur (1) est un capteur (1) selon le procédé du temps de vol de la lumière.

3. Système selon l'une au moins des revendications précédentes, **caractérisé en ce que** la caméra (8) est disposée dans ledit boîtier (4).

4. Système selon l'une au moins des revendications précédentes, **caractérisé en ce qu'**un événement dans le champ de protection (6) fait démarrer une prise de vue de la caméra (8).

5. Système selon l'une au moins des revendications précédentes, **caractérisé en ce qu'**un mode de prise de vue de la caméra (8) peut être réglé dans l'unité de commande et d'évaluation (7).

6. Système selon l'une au moins des revendications précédentes, **caractérisé en ce que** les prises de vue de la caméra sont évaluées par l'unité de commande et d'évaluation, qui ont mené à une intervention dans le champ de protection.

7. Système selon l'une au moins des revendications précédentes, **caractérisé en ce qu'**un taux de répétition des prises de vue pour la caméra peut être modifié dans l'unité de commande et d'évaluation.

8. Système selon l'une au moins des revendications précédentes, **caractérisé en ce que** l'unité de commande et d'évaluation (7) est réalisée pour effectuer une reconnaissance de code sur la base de la prise de vue de la caméra, et des caractères d'un code à barres ou d'un code matriciel peuvent être identifiés par l'unité de commande et d'évaluation (7).

9. Système selon l'une au moins des revendications précédentes, **caractérisé en ce que** l'unité de commande et d'évaluation (7) est réalisée pour effectuer une reconnaissance d'objet sur la base de la prise de vue de la caméra (8) et pour distinguer les objets autorisés (10) des objets non autorisés, et pour supprimer un signal de détection d'objet du capteur dans le cas d'objets autorisés (10).

10. Système selon l'une au moins des revendications précédentes, **caractérisé en ce que** la caméra (8) est une caméra (8) selon le procédé du temps de vol de la lumière.

11. Système selon l'une au moins des revendications précédentes, **caractérisé en ce qu'**il est prévu une interface de sortie pour les données de mesure.

12. Véhicule autonome (12) comprenant un système selon l'une au moins des revendications 1 à 11.
